# EUROPÄISCHE PATENTSCHRIFT

(11) **EP 3 684 862 B1**
(45) Veröffentlichungstag und Bekanntmachung des Hinweises auf die Patenterteilung: **15.10.2025**
(21) Anmeldenummer: 18731958.7
(22) Anmeldetag: 05.06.2018
(51) Int. Cl.: C09C 1/00, B42D 25/40, B42D 25/378, B42D 25/425, B44C 1/22, B44C 1/24, C09C 3/04

(54) **VERFAHREN ZUR HERSTELLUNG VON PIGMENTEN MIT VORGEGEBENER INNEN- UND/ODER AUSSENKONTOUR**
METHOD FOR PRODUCING PIGMENT FRAGMENTS WITH A PREDEFINED INTERNAL AND/OR EXTERNAL CONTOUR
PROCÉDÉ DE PRODUCTION DE PIGMENTS À PROFIL INTÉRIEUR ET/OU EXTÉRIEUR PRÉDÉFINIS

(30) Priorität: 21.09.2017 DE 102017008831
(43) Veröffentlichungstag der Anmeldung: 29.07.2020
(73) Patentinhaber: Giesecke+Devrient Currency Technology GmbH, 81677 München (DE)
(72) Erfinder: FUHSE, Christian, 83624 Otterfing (DE); HEIM, Manfred, 83646 Bad Tölz (DE); RENNER, Patrick, 83677 Reichersbeuern (DE); RAHM, Michael, 83646 Bad Tölz (DE); MANG, Thomas, 83607 Holzkirchen (DE); MENGEL, Christoph, 83607 Holzkirchen (DE); SCHIFFMANN, Peter, 81673 München (DE); SCHERER, Maik Rudolf Johann, 82491 Grainau (DE); HUNGER, Christoph, 83734 Hausham (DE)
(74) Vertreter: Giesecke+Devrient IP
(86) Internationale Anmeldenummer: PCT/EP2018/000289
(87) Internationale Veröffentlichungsnummer: WO 2019/057321

(56) Entgegenhaltungen:
- EP-A1- 2 062 947
- WO-A2-02/083430
- WO-A2-2005/017048
- DE-A1- 102015 006 854

## Beschreibung

Die Erfindung betrifft ein Verfahren zur Herstellung von Pigmenten mit vorgegebener Kontur.

Datenträger, wie Wert- oder Ausweisdokumente, aber auch andere Wertgegenstände, wie etwa Markenartikel, werden zur Absicherung oft mit Effektpigmenten versehen, die eine Überprüfung der Echtheit des Datenträgers gestatten und die zugleich als Schutz vor unerlaubter Reproduktion dienen. Effektpigmente können beispielsweise in das Substrat des Datenträgers integriert sein oder auf das Substrat des Datenträgers aufgebracht werden. Pigmente mit vorgegebener Außenkontur sind eine bekannte Form solcher Effektpigmente.

Effektpigmente können unter anderem durch Beschichten eines Trägermaterials hergestellt werden, wobei anschließend die Beschichtung vom Träger abgelöst und zu kleinen Bruchstücken gemahlen wird. Diese Bruchstücke können als Pigmente in einem Bindemittel dispergiert und schließlich verdruckt werden. Durch die Herstellungsweise sind weder die Form der Pigmente noch ihre Größe genau definiert.

Es sind jedoch auch verschiedene Verfahren bekannt, um Pigmente mit vorgegebener Außenkontur zu erstellen.

Beispielsweise WO 2005/017048 A2 schlägt vor, das Trägermaterial entsprechend der gewünschten Pigmentkontur zu prägen und die Beschichtung auf dem geprägten Trägermaterial zu erstellen. Die Beschichtung wird von der Trägerschicht abgenommen und durch Mahlen und Sieben in Pigmente zerbrochen, die einen Durchmesser von 5 bis 100 µm haben können. Auch in EP 2 062 947 A1, welche eine verbesserte Prägestruktur vorschlägt, um die Kontur der Pigmente vorzugeben, wird die abgenommene Schicht in Pigmente zerbrochen.

In alternativen Lösungen werden die Pigmentschichten durch Lasern oder Ätzen in Pigmente strukturiert.

Der Erfindung liegt die Aufgabe zugrunde, ein flexibles aber kostengünstiges Herstellungsverfahren für Pigmente anzugeben, welches es insbesondere erlaubt Pigmente mit komplexeren Außenkonturen zu erstellen.

Diese Aufgabe wird durch die Merkmale des unabhängigen Anspruchs 1 gelöst. Weiterbildungen der Erfindung sind Gegenstand der abhängigen Ansprüche.

Ein Verfahren zur Herstellung von Pigmenten mit vorgegebener Kontur umfasst die folgenden Schritte:
- Erstellen einer Pigmentschicht auf einem Ausgangssubstrat;
- Lösen von dem Ausgangssubstrat; und
- Strukturieren der Pigmentschicht in eine Vielzahl der Pigmente.

Vorliegend wird die Pigmentschicht mit einem Zwischensubstrat in Kontakt gebracht. Die Pigmentschicht haftet mindestens abschnittsweise an dem Zwischensubstrat an. Danach werden Zwischensubstrat und Ausgangssubstrat wieder voneinander getrennt.

Insbesondere kann die vorgegebene Kontur des Pigments dabei eine Außenkontur (Umriss des Pigments) umfassen. Die Außenkontur des Pigments begrenzt das Pigment. Ebenso kann die vorgegebene Kontur des Pigments eine Innenkontur aufweisen. Die Innenkontur des Pigments begrenzt eine Öffnung im Pigment. Das Verfahren ermöglicht es Pigmente mit komplexerer Außenkontur bereit zu stellen als das herkömmliche Brechen der Pigmentschicht. Zudem können erstmals Pigmente mit Innenkontur, also mit einer umlaufenden Bruchkante, welche eine Öffnung innerhalb des Pigments begrenzt, durch Brechen hergestellt werden.

Durch den Kontakt mit dem Zwischensubstrat sind die Pigmente (bzw. Pigmentabschnitte der Pigmentschicht) für den Schritt des Lösens und/oder des Strukturierens gegen Zerbrechen geschützt.

Bevorzugt wird die Pigmentschicht durch den Schritt des Trennens von Zwischensubstrat und Ausgangssubstrat in die Vielzahl der Pigmente strukturiert. Beim Trennen bricht die Pigmentschicht in die Vielzahl der Pigmente mit vorgegebener Kontur.

Mit dem vorliegenden Verfahren werden im Schritt des Trennens bevorzugt mindestens 2 000 Pigmente, besonders bevorzugt mindestens 5 000 Pigmente und weiter bevorzugt mehr als 10 000 Pigmente, gleichzeitig aus der Pigmentschicht strukturiert (bzw. heraus gebrochen). Diese Anzahl wird bevorzugt jeweils entlang einer Trennlinie gleichzeitig strukturiert.

Insbesondere umfasst die Pigmentschicht Pigmentabschnitte und Restabschnitte. Die Pigmentabschnitte haben die Kontur der Pigmente. Die Pigmentabschnitte sind voneinander beabstandet, insbesondere durch den Restabschnitt. Die Restabschnitte haben eine zu den Pigmentabschnitten inverse Kontur. Optional können die Restabschnitte miteinander verbunden sein. In dem Schritt des Trennens bricht die Pigmentschicht und entweder die Pigmentschichtabschnitte oder die Restabschnitte werden von dem Ausgangssubstrat gelöst. Die jeweils anderen Abschnitte - also die Restabschnitte oder die Pigmentschichtabschnitte respektive - liegen auch nach dem Trennen auf dem Ausgangssubstrat.

Durch das vorliegende Verfahren können Pigmente mit der vorgegebenen Kontur in hoher Reinheit hergestellt werden. Der Grad der Reinheit kann in Gewichtsprozent angegeben werden. Die Pigmente mit vorgegebener Kontur bilden mehr als 90%, vorzugsweise mehr als 95%, der Gewichtsmasse umfassend die Pigmente und Verunreinigungen, welche insbesondere durch Bruchstücke der Pigmentschicht und nur geringfügig durch Pigmente mit beschädigter Kontur gebildet werden. Verunreinigungen mit Bruchstücken werden insbesondere vermieden, da die Restabschnitte der Pigmentschicht (oder die Pigmentabschnitte) auf dem Ausgangssubstrat haften bleiben.

In der bevorzugten Ausgestaltung werden die Pigmente (bzw. die Pigmentschichtabschnitte der Pigmentschicht) durch den Schritt des Trennens von dem Ausgangssubstrat gelöst. Die Pigmente werden vom Ausgangssubstrat auf das Zwischensubstrat übertragen und sind zum Zeitpunkt des Brechens durch das Zwischensubstrat geschützt. Die Pigmente werden anschließend vom Zwischensubstrat gelöst.

In einer anderen Ausgestaltung liegt die Vielzahl der Pigmente nach dem Trennen (bzw. die Pigmentschichtabschnitte der Pigmentschicht) weiterhin auf dem Ausgangssubstrat vor. Die Pigmente werden anschließend vom Ausgangssubstrat gelöst. In dem Schritt des Trennens bricht die Pigmentschicht und die Restabschnitte werden von dem Ausgangssubstrat gelöst.

Lediglich alternativ zu den vorgenannten Ausgestaltungen wird die Pigmentschicht bereits vor dem Schritt des Trennens strukturiert. In dem Schritt des Trennens werden aus der bereits strukturierten Pigmentschicht entweder die Pigmentschichtabschnitte oder die Restabschnitte von dem Ausgangssubstrat gelöst. Die Pigmente werden zum Zeitpunkt des Lösens durch das Zwischensubstrat (und das Ausgangssubstrat) geschützt.

In dem Ausgangssubstrat und/oder dem Zwischensubstrat wird eine Reliefstruktur erstellt, welche die Kontur der Pigmente vorgibt. Die Reliefstruktur umfasst insbesondere erhabene Abschnitte, in welchen die Pigmentschicht mit einer Haftschicht (des jeweils anderen Substrates) in Kontakt kommt und anhaftet, und vertiefte Abschnitte, mit welchen ein Kontakt der Pigmentschicht mit dieser Haftschicht vermieden wird. Entweder die Vertiefungen oder die Erhebungen werden mit der Kontur der Pigmente vorgesehen. Die Reliefstruktur kann durch Prägen, Lasern oder Ätzen erstellt werden. Da die Reliefstruktur (und/oder eine im Folgenden noch erläuterte Haftungsstruktur) noch nicht zu Einzelpigmenten führt, wird diese vorliegend auch als Vorstrukturierung bezeichnet. Die Höhe der Reliefstruktur ist vorzugsweise größer als die Höhe der Pigmentschicht. Insbesondere ist die Reliefstruktur in seiner Höhe (Differenz zwischen den planen Erhebungen und Vertiefungen) an die Höhe der Pigmentschicht und/oder die Haftschicht, insbesondere deren Höhe und Viskosität, angepasst. Die Anpassung bewirkt, dass selektiv nur in den erhabenen Abschnitten die Pigmentschicht an dem Zwischensubstrat anhaftet (oder stärker anhaftet als an dem Ausgangssubstrat). Das Strukturieren der Pigmentschicht in Einzelpigmente erfolgt durch das Brechen der Pigmentschicht mit den durch die Vorstrukturierung definierten, für die Pigmente vorgegebenen Konturen.

Das Ausgangssubstrat kann - vorzugsweise vor, aber alternativ auch nach, dem Erstellen der Pigmentschicht auf dem Ausgangssubstrat - mit der Reliefstruktur versehen werden. Die Reliefstruktur kann insbesondere durch Prägen erstellt werden, vorzugsweise durch Prägen in eine härtbare (Lack-) Schicht, die nach dem Prägen, beispielsweise mittels UV-Licht, ausgehärtet wird. Im Ausgangssubstrat ohne Pigmentschicht kann die Reliefstruktur alternativ auch durch Ätzen oder Lasern erstellt werden. Entsprechend der Reliefstruktur umfasst die Pigmentschicht auf dem vorstrukturierten Ausgangssubstrat Pigmentabschnitte und Restabschnitte. Nach dem in Kontakt bringen mit dem Zwischensubstrat haften die erhabenen Abschnitte an der Haftschicht des Zwischensubstrats. Vorzugsweise sind die Pigmentabschnitte die erhabenen Abschnitte, welche - durch die Haftung an dem Zwischensubstrat stabilisiert sind und - beim Trennen der Substrate aus der Pigmentschicht brechen, an dem Zwischensubstrat haften bleiben und sich vom Ausgangssubstrat lösen.

Wird das Zwischensubstrat mit der Reliefstruktur versehen, entstehen analog erhabene oder vertiefte Abschnitte der Haftschicht des Zwischensubstrates. In einer ersten Alternative wird das Zwischensubstrat mit der Reliefstruktur versehen und anschließend mit der Haftschicht beschichtet. Bevorzugt wird die Reliefstruktur geprägt, insbesondere in eine Prägelackschicht des Zwischensubstrates geprägt. In einer zweiten Alternative wird die Zwischensubstrat zusammen mit der Haftschicht vorstrukturiert, also beispielsweise geprägt. Wiederum lösen sich entweder die Pigmentabschnitte oder die Restabschnitte vom Ausgangssubstrat, weil sie an der Haftschicht des Zwischensubstrats haften bleiben.

Anstelle - oder optional zusätzlich zu - der Reliefstruktur kann eine Haftstruktur als Vorstrukturierung dienen. Auf der Pigmentschicht, dem Ausgangssubstrat und/ oder dem Zwischensubstrat wird eine Haftstruktur erstellt, welche die Kontur der Pigmente vorgibt. Als eine solche Vorstrukturierung kann entweder eine haftvermittelnde Haftstruktur oder auch eine haftungsverhindernde Anti-Haftstruktur dienen. Beispielsweise könnte die Haftschicht des Ausgangssubstrates vorstrukturiert werden, insbesondere durch selektives Entfernen oder Deaktivieren mittels Laser oder durch selektiven Anti-Haftaufdruck. Entsprechend der Vorstrukturierung bleiben wiederum vorzugsweise die Pigmente, also die Pigmentabschnitte der Pigmentschicht, an dem Zwischensubstrat haften und lösen sich vom Ausgangssubstrat.

Das Zwischensubstrat umfasst zumindest eine Zwischensubstratschicht. In der Regel umfasst das Zwischensubstrat die Zwischensubstratschicht und eine Haftschicht. Die Haftschicht des Zwischensubstrats ist so ausgebildet, dass die Pigmentschicht stärker an der Haftschicht des Zwischensubstrats haftet als an dem Ausgangssubstrat (bzw. dessen Haft- oder Antihaftschicht). Das Ausgangssubstrat umfasst zumindest eine Ausgangssubstratschicht. In der Regel umfasst das Ausgangssubstrat die Ausgangssubstratschicht und eine Haft- oder Antihaftschicht. Die Haftschicht des Ausgangssubstrats kann durch einen Lack gebildet sein. Die Ausgangssubstratschicht umfasst bevorzugt eine Folie - insbesondere eine Kunststoff-Folie, wie PET-Folie - sowie eine gehärtete Prägelackschicht. Die Ausgangssubstratschicht und/oder die Zwischensubstratschicht liegt vorzugsweise als (Folien)Bahn mit einer Mindestbreite von 20 cm, insbesondere 50 cm und besonders bevorzugt 100 cm, vor. Die Folienbahn kann eine Breite von 200 cm aufweisen. Die Bahn hat eine Mindestlänge von 10 Metern, vorzugsweise 100 Meter. Sie kann auf einer Rolle bereitgestellt werden.

Die Pigmentschicht kann mehrere Teilschichten umfassen, die optional ihrerseits aus Unterschichten gebildet sein können. Die Pigmentschicht umfasst vorzugsweise eine erste Schicht erhöhter Stabilität (Trägerschicht) und mindestens eine zweite, optisch wirksame Schicht. Die erste Schicht kann insbesondere durch einen gehärteten Lack gebildet sein.

Das Pigment kann ein Zusatzmotiv enthalten, welches vorzugsweise passergenau zur Kontur des Pigmentes angeordnet ist und/ oder eine von der Pigmentkontur unabhängige Kontur aufweist. Die passergenaue Anordnung kann insbesondere ohne zusätzlichen Aufwand erreicht werden, wenn das Zusatzmotiv in dem Schritt des Erstellens der Reliefstruktur zumindest teilweise mit erstellt wird. Beispielsweise kann mit einer Prägung des Ausgangssubstrates sowohl das Relief als auch eine optisch wirksame Reliefstruktur des Zusatzmotivs eingebracht werden. Eine Kontur des Zusatzmotives kann der (Außen- oder Innen-)Kontur des Pigments in einem festen Abstand folgen. Die Pigmentabschnitte der Pigmentschicht und somit die Oberfläche des Pigments kann völlig eben, also relieffrei, sein. Alternativ können sie - zumindest bereichsweise - eine Oberflächenstruktur aufweisen. Das Zusatzmotiv kann durch die Oberflächenstruktur gebildet sein. Die Oberflächenstruktur besitzt eine geringere Tiefenmodulation, beispielsweise von 3 nm bis zu ca. 500 nm, als der konturbestimmende Anteil der Reliefstruktur. Das Zusatzmotiv kann Subwellenlängenstrukturen, wie Mottenaugenstrukturen, und / oder diffraktive Strukturen, wie holographische Gitter aufweisen, wobei letztere typische Perioden zwischen 500 nm und 1,5 µm haben. Insbesondere kann das Zusatzmotiv Mikrospiegel enthalten. Diese können in ihrer Form durch die Prägung bestimmt sein und reflektierend (Metall- oder HRI-Schicht) beschichtet werden. Alternativ ist die Kontur des Zusatzmotives unabhängig von der Kontur des Pigmentes, kann also frei gewählt werden. So kann beispielsweise eine durchgehende Teilschicht der Pigmentschicht erstellt werden, die entlang der Pigmentkontur bricht, und eine zusätzliche, nicht durchgehende, Teilschicht der Pigmentschicht erstellt werden, welche beispielsweise das Zusatzmotiv darstellt.

Die aus der Pigmentschicht entstandenen Pigmente können als flächige Pigmente oder plättchenförmige Pigmente bezeichnet werden. Die Außenkontur kann nahezu beliebige Formen aufweisen, soweit das Pigment eine ausreichende Stabilität für die weitere Verarbeitung aufweist. Auch die Innenkontur, also Öffnungen, kann mit beliebiger Größe und Geometrie gewählt werden.

Selbstverständlich sind (die) Pigmente für ein Drucken der Pigmente vorgesehen. Die - insbesondere von dem Ausgangs- und/oder dem Zwischensubstrat gelösten - Pigmente werden zu einer Druckfarbe verarbeitet. Eine Druckfarbe mit den Pigmenten wird gedruckt. Bevorzugt erfolgt der Druck als Siebdruck, dabei insbesondere mittels zonalem Rakeln. Alternativ kann das Pigment mittels Tiefdruck und optional mittels Flexodruck verdruckt werden. Die Druckfarbe umfasst die Pigmente sowie zumindest ein Lösungsmittel sowie optional ein Bindemittel. Insbesondere wenn die erzeugten Pigmente eine Pigmentgröße von weniger als 15 µm, vorzugsweise weniger als 10 µm, aufweisen, kann die Druckfarbe in einem Offsetdruckverfahren verwendet werden.

Im Vergleich zu anderen Herstellungsverfahren können vorliegend Pigmente mit erhöhter Komplexität selbst bei geringerer Größe und Dicke, insbesondere mit gleichbleibend hoher Zuverlässigkeit, erreicht werden. Das Pigment weist eine Größe bzw. laterale Ausdehnung von weniger als 100 µm, insbesondere weniger als 50 µm, besonders bevorzugt unter 30 µm auf. Die aktuell erzielbaren Pigmentgrößen beginnen bei wenigen 100 nm. Absehbar sind Pigmente mit Größen möglich zwischen 100 nm bis 100 µm, bevorzugt zwischen 200 nm und 50 µm, besonders bevorzugt zwischen 200 nm (bzw. 2 µm) und 30 µm. Die Dicke der Pigmente liegt im Bereich von 30 nm bis 4 µm (bzw. bis 2 µm), bevorzugt zwischen 100 nm und 1 µm.

Die Außenkontur des Pigments weist Abweichungen von einer regelmäßigen Außenkontur auf. Als regelmäßige Außenkonturen werden alle Grundformen vom einfachen Vieleck (mit 3 bis n Ecken) einschließlich einem Kreis betrachtet. Ausbuchtungen bzw. Einbuchtungen, die von der regelmäßigen Grundform abweichen, haben folgende typischen Größen: 100 nm bis 30 µm, bevorzugt 300 nm bis 10 µm und besonders bevorzugt 500 nm bis 5 µm. Abweichungen von einer regelmäßigen Außenkontur bilden Schwachstellen im Pigment. Das Pigment wird somit - ohne Anwendung des vorliegenden Verfahrens - schneller an seiner Schwachstelle innerhalb des Pigments als an seiner Außenkontur brechen. Bezogen auf die Pigmentgröße, die maximale Größe des Pigments in einer Richtung, reduziert die mindestens eine Einbuchtung das Pigment an einer Schwachstelle auf 5% bis 66%, bzw. 5% bis 49% der Pigmentgröße. Das Pigment hat an seiner schmalsten Stelle somit nur noch 5% bis 66%, bevorzugt 5% bis 49%, besonders bevorzugt zwischen 5 und 24%, der Pigmentgröße. Analog bilden Ausbuchtungen bezogen auf die Pigmentgröße entsprechend schmale Stellen (Schwachstellen) im Pigment. Ausbuchtungen (und/oder Einbuchtungen) bilden eine Schmalstelle im Pigment, welche in einem Abstand von mehr als 3%, bevorzugt mehr als 6%, besonders bevorzugt mehr als 12%, der Pigmentgröße von der Außenkontur entfernt liegt. Entsprechend beträgt die Mindestlänge der Ausbuchtung (gemessen vom Pigmentzentrum bzw. Schwerpunkt zur Außenkontur) 3% (6% bzw. 12%) der Pigmentgröße. Die Ausbuchtung ist an der Schmalstelle nur 1% bis 33%, bevorzugt 1% bis 15%, besonders bevorzugt 1% bis 5% der Pigmentgröße breit. Die Ausbuchtung weist an der Schmalstelle einen Öffnungswinkel, gebildet von den Rändern der Ausbuchtung, von weniger als 60 Grad, bevorzugt weniger als 45 Grad, besonders bevorzugt weniger als 30 Grad auf. Der Öffnungswinkel an der Schmalstelle kann Null sein, beispielsweise im Falle einer rechteckigen Ausbuchtung (mit parallelen Rändern) oder negativ sein, beispielsweise im Falle einer sich nach außen verbreiternden Ausbuchtung.

Eine vorgegebene Innenkontur (Öffnung im Pigment) des Pigments kann die vorgegebene Kontur darstellen oder die vorgegebene Außenkontur des Pigments ergänzen. Die Öffnung kann dabei als regelmäßiges Vieleck (Dreicek, Viereck, ... n-Eck), Kreis, Oval, unregelmäßiges Vieleck (wie Trapez), Symbol (mit Ecken und Rundungen) oder Text ausgestaltet sein. Vorzugsweise folgt die Öffnung der Außenkontur (teilweise oder vollständig) und/oder folgt die Öffnung einer Zusatzinformation auf dem Pigment.

Die Innenkontur weist eine Größe von mindestens 100 nm auf. Das Pigment weist zwischen Innenkontur und Außenkontur einen Mindestbreite von 300 nm, insbesondere 500 nm bzw. 1 µm auf, insbesondere eine Breite von 300 nm bis 10 µm, besonders bevorzugt 500 nm bis 5 µm auf. Bezogen auf die Pigmentgröße weist das Pigment an seiner schmalsten Stelle zwischen Außenkontur und Innenkontur eine Breite von weniger als 66%, bevorzugt unter 30%, besonders bevorzugt unter 10%, der Pigmentgröße auf.

In der Regel werden Pigmente mit identischer Kontur hergestellt. In einer vorteilhaften Ausgestaltung werden aus einer Pigmentschicht gleichzeitig Pigmente mit zwei (oder drei oder mehr als drei) unterschiedlichen vorgegebenen Konturen hergestellt. In Weiterbildungen umfassen die gleichzeitig hergestellten Pigmente (zumindest) eine einheitliche, vorgegebene Außenkontur und mindestens zwei unterschiedliche Innenkonturen für die einheitliche, vorgegebene Außenkontur oder (zumindest) eine einheitliche, vorgegebene Innenkontur und mehrere unterschiedliche Außenkonturen für die einheitliche, vorgegebene Innenkontur. Beispielsweise kann die einheitliche Außenkontur ein erstes (supra-) nationales Symbol darstellen und die Innenkontur regionale (oder entsprechend nationale) Symbole darstellen.

Als eine optische Effektschicht des Pigments kann eine Metallschicht verwendet werden, beispielsweise aus Aluminium, Chrom, Kupfer, Eisen, Nickel, Kobalt, Silber, Gold oder aus Legierungen der vorgenannten Metalle. Die Dicke der Metallschicht liegt zwischen 2 nm und 200 nm, bevorzugt zwischen 10 nm und 50 nm, besonders bevorzugt zwischen 15 nm und 30 nm. Die optische Effektschicht kann als reflektierende oder semitransparente Schicht ausgebildet sein, anstelle einer Metallschicht kann dabei eine hochbrechende Schicht (HRI-Schicht) vorgesehen werden. Bevorzugt umfasst das Pigment Dreischichtaufbau, der als farbkippendes und/oder farbfilternder Aufbau gestaltet sein kann. Das Pigment kann durch den Dreischichtaufbau gebildet sein, oder den Dreischichtaufbau als tragende Teilschicht bzw. als optisch aktive Teilschicht umfassen. Bevorzugt bestehen die Dreischichtaufbauten aus einer semitransparenten Metallschicht, einem Dielektrikum und einer reflektierenden (oder semitransparenten) Metallschicht. Als Dielektrika werden zum Beispiel SiO2, ZnS, MgF2 oder TiO2 verwendet.

Besonders bevorzugt sind zumindest die optisch aktiven Teilschichten des Pigments symmetrisch zur Pigmentebene vorgesehen. Somit ist eine Orientierung des Pigments nach dem Druckvorgang unerheblich. Beispielsweise kann das Pigment durch zwei identische semintransparente Teilschichten mit einer tragenden Abstandsschicht gebildet sein. Solche Pigmente weisen bevorzugt in Aufsicht einen metallischen Glanz mit einem bestimmten Farbspektrum auf, während sie in Durchsicht ein zu diesem Farbspektrum komplementäres Spektrum zeigen, besonders bevorzugt Gold in Aufsicht und Blau in Durchsicht. In einer anderen Variante sind symmetrisch um eine gemeinsam genutzte reflektierende Schicht (oberhalb und unterhalb) jeweils eine dielektrische und eine semitransparente Schicht vorgesehen.

Damit die Pigmente in ihrer Orientierung durch ein Magnetfeld beeinflussbar sind, kann eine magnetische Schicht verwendet werden, die beispielsweise aus den Metallen Eisen, Nickel, Kobalt oder Legierungen, welche diese Metalle enthalten, gebildet werden können. Solche Legierungen enthalten bevorzugt weitere Elemente wie Si, Nd, B, Gd, Sm, Sr, Ba oder Mn. Die magnetische Schicht befindet sich vorteilhaft im Inneren der Pigmente. In einer besonders vorteilhaften Variante ist die magnetische Teilschicht zwischen zwei reflektierenden Teilschichten, beispielsweise aus Aluminium, vorgesehen. Besonders bevorzugt weisen die Pigmente eine zentrale magnetische Schicht auf, die beidseitig (symmetrisch) mit einem Dreischichtaufbau versehen ist, also insbesondere auf beiden Seiten jeweils - von innen nach außen - eine reflektierende Schicht (vorzugsweise eine reflektierende metallische Schicht), eine Abstandsschicht (vorzugsweise eine dielektrische Schicht) und eine Absorberschicht (vorzugsweise eine semitransparente metallische Schicht) umfasst.

Durch das vorliegende Verfahren können erstmals Pigmente erstellt werden, mit
- einer das Pigment begrenzenden Bruchkante, welche eine Bruchkraft repräsentiert, die größer ist als eine entsprechende Bruchkraft für das Pigment, und/oder
- einer innenliegenden Bruchkante, welche eine Öffnung im Pigment begrenzt.

Die Bruchkraft des Pigments wird durch seine schmalste Stelle bestimmt. Das Pigment kann somit leichter in seiner Außenkontur zumindest einen spitzen Winkel mit einem Winkel kleiner 45 Grad, vorzugsweise kleiner 30 Grad, aufweisen oder eine sich zum Pigmentzentrum verjüngende Außenkontur aufweisen. Derartige Außenkonturen waren bisher problematisch und allenfalls mit stark erhöhtem Aufwand, wie im Vergleich zur Dicke der Pigmentschicht sehr dünnen Sollbruchstellen, denkbar. Die Bruchkraft des Pigments ist vorliegend mindestens um einen Faktor 1,1, vorzugsweise 1,5, besonders bevorzugt um einen Faktor 2 kleiner als die Bruchkraft der Bruchkante. Die Bruchkraft der Bruchkante kann ausgehend von einer Bruchkraft der Pigmentschicht (Messwert) anhand der Bruchkanten(ober)fläche und der Kontur bestimmt werden (Berechnung). Bestimmt oder gemessen wird eine Bruchkraft als maximal anwendbare Kraft bis das Messobjekt bricht. Vorliegend wird das Pigment vorzugsweise an zwei Punkten belastet, die jeweils in vorgegebenem Abstand zu einem Auflagepunkt oder einer Auflagelinie des Pigments liegen. Zumindest näherungsweise entspricht das Verhältnis der Bruchkräfte dem Verhältnis der Bruchflächen. Die Pigmentquerschnittsfläche an der schmalsten Stelle des Pigments, also insbesondere Breite der Schwachstelle des Pigments mal Höhe der Pigmentschicht, kann vorliegend kleiner sein als die Oberfläche der Bruchkante des Pigments an seiner Außenkontur, also insbesondere Länge der Bruchkante mal Höhe der Bruchkante.

Die innenliegende Bruchkante bildet die Innenkontur des Pigments. Die das Pigment begrenzende Bruchkante bildet die Außenkontur des Pigments.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1a, 1b: zwei verschiedene Pigmente mit vorgegebener Kontur in Aufsicht;
- Fig. 2a, b, c: Pigmentschicht, strukturierte Pigmente und lose Pigmente jeweils in Aufsicht;
- Fig. 3: ein reliefstrukturiertes Ausgangssubstrat mit Pigmentschicht vor dem in Kontaktbringen mit einem Zwischenträgersubstrat;
- Fig. 4: das Ausgangssubstrat und das Zwischenträgersubstrat aus Fig. 3 nach dem Trennen der Substrate;
- Fig. 5: ein haftungsstrukturiertes Ausgangssubstrat mit Pigmentschicht vor dem in Kontaktbringen mit einem Zwischenträgersubstrat;
- Fig. 6: das Ausgangssubstrat und das Zwischenträgersubstrat aus Fig. 5 nach dem Trennen der Substrate;
- Fig. 7a, 7b: ein mehrschichtiges Pigment vorgegebener Kontur in Aufsicht und im Querschnitt; und
- Fig. 8: eine Herstellungsvorrichtung für Pigmente.

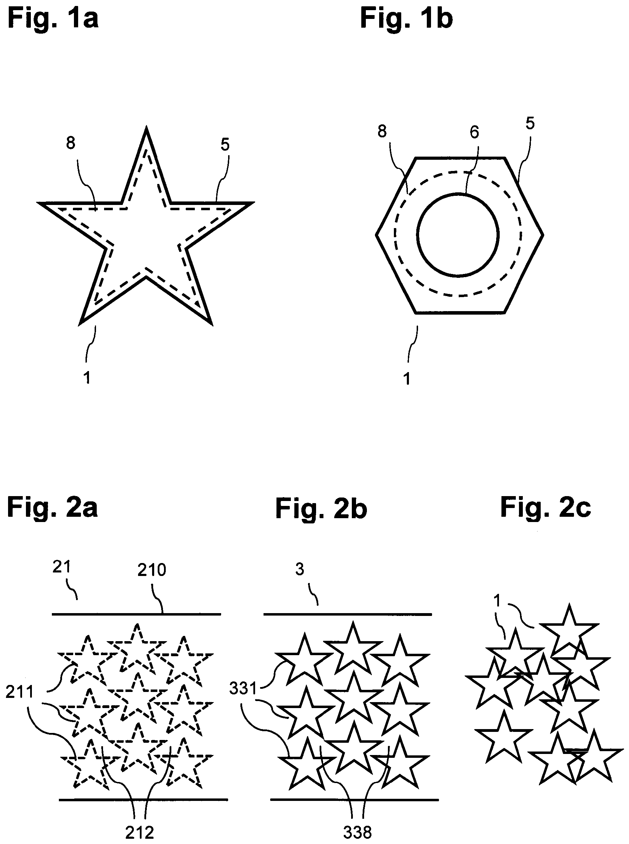

Die in Fig.1a und 1b gezeigten Pigmente 1 weisen unterschiedliche Außenkonturen 5 auf. Das Pigment 1 in Fig. 1b umfasst zusätzlich eine Innenkontur 6, die eine Öffnung in dem Pigment 1 begrenzt. Die Kontur 5, 6 kann aufgrund der Pigmentgröße, die im Bereich von 100 nm bis 100 µm liegt, vom Betrachter nicht ohne Hilfsmittel erkannt werden. Insofern kann das Pigment als verstecktes Sicherheitsmerkmal verwendet werden.

Beide Pigmente umfassen ein Zusatzmotiv 8, welches passergenau zu einer Kontur des Pigmentes angeordnet ist. Die Kontur des Zusatzmotivs 8 in Fig1a folgt der Außenkontur 5 des Pigments in einem vorgegeben Abstand. In Fig. 1b folgt die (hier runde) Kontur des Zusatzmotivs der (runden) Innenkontur 6 des Pigments 1. Das Zusatzmotiv kann jedoch auch eine von der Pigmentkontur unabhängige, eigene Kontur aufweisen.

Fig. 2a zeigt in Aufsicht ein Ausgangssubstrat mit Pigmentschicht 21. Auf einem vorstrukturierten Ausgangssubstrat ist eine durchgehende Pigmentschicht 210 erstellt worden. Entsprechend der Vorstrukturierung umfasst die Pigmentschicht 210 eine Vielzahl von Pigmentabschnitten 211 und die zwischen den Pigmentabschnitten liegenden Restabschnitte 212.

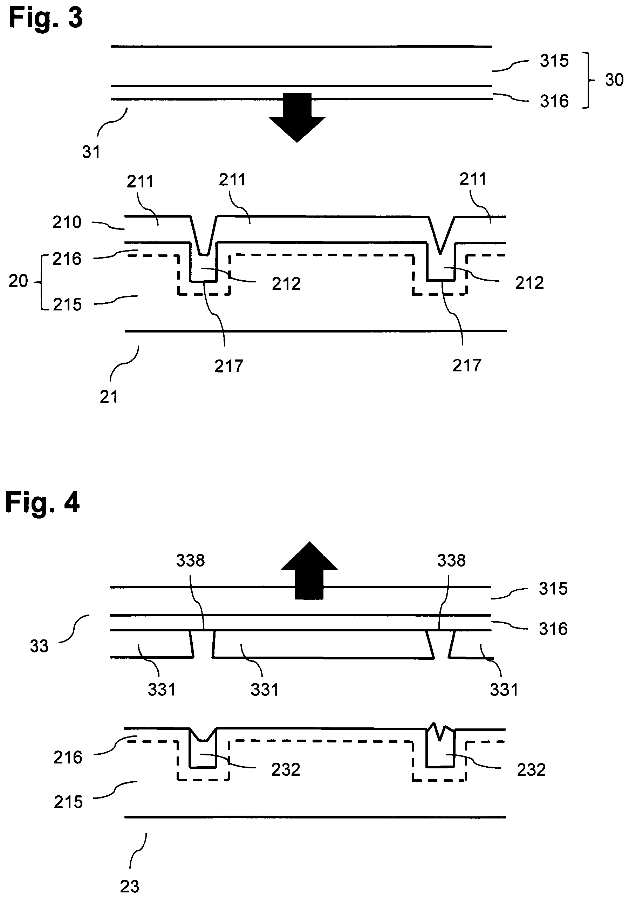

In der in Fig. 3 im Querschnitt gezeigten Ausgestaltung ist das Ausgangssubstrat 20 mit einem Relief als Vorstrukturierung versehen. Die Reliefstruktur wird durch vertiefte Abschnitte 217 gebildet. Das Ausgangssubstrat 20 umfasst zumindest eine Ausgangssubstratschicht 215, insbesondere in Form einer PET-Folie, und eine optionale Prägelackschicht 216. In einer nicht dargestellten, jedoch bevorzugten Variante ist die Reliefstruktur nur in der Prägelackschicht 216 ausgeführt. Die auf dem Ausgangssubstrat erstellte Pigmentschicht 210 ist eine durchgehende Schicht. In weniger vorteilhaften Ausgestaltungen wird die Pigmentschicht, beispielsweise durch entsprechend breite und/oder tiefe Vertiefungen, bereits strukturiert erstellt. Entsprechend der Reliefstruktur bilden sich Pigmentabschnitte 211 und Restabschnitte 212 der Pigmentschicht aus. Die Pigmentabschnitte 211 liegen auf den erhabenen Abschnitten der Reliefstruktur und die Restabschnitte 212 in den Vertiefungen 217. Wie in Figur 2a erkennbar, sind die Pigmentabschnitte 211 bereits entsprechend der Kontur der Pigmente 1 vorstrukturiert. Die zwischen den Pigmentabschnitten 211 liegenden Restabschnitte 212 weisen eine zu den Pigmenten inverse Kontur auf.

Ebenso in Fig. 3 dargestellt ist ein Zwischensubstrat 30, welches eine Zwischensubstratschicht 315, beispielsweise eine weitere PET-Folie, und eine unstrukturierte Haftschicht 316 umfasst. Die Zwischensubstratschicht 30 wird - wie durch den Pfeil angedeutet - mit der Pigmentschicht 210 in Kontakt gebracht. In dem Schritt kann Druck ausgeübt werden und die Temperatur erhöht werden. Die Pigmentschicht 210 haftet aufgrund der Reliefstruktur mit seinen Pigmentabschnitten 211 an der Haftschicht 316 des Zwischensubstrates an. Die Restabschnitte 212 kommen gar nicht in Kontakt mit der Haftschicht 316 oder zumindest nicht ausreichend, um an dieser anzuhaften.

Das Ausgangssubtrat und das Zwischenträgersubstrat werden wieder voneinander getrennt, wie es in Fig. 4 - wiederum durch einen Pfeil - angedeutet ist. Fig. 4 zeigt das Ausgangssubstrat einschließlich Resten der Pigmentschicht 23 und das Zwischensubstrat einschließlich Pigmentabschnitten 33 bereits im getrennten Zustand.

Beim Trennen der beiden Substrate bricht die Pigmentschicht. Sie wird strukturiert in die einzelnen Pigmente, welche als Pigmentabschnitte 331 vorliegen. Die Pigmentabschnitte 331 haften an der Haftschicht 316 des Zwischensubstrates. Zwischen den Pigmentabschnitten 331 gibt es auf dem Zwischensubstrat 33 - wie in Fig. 2b in Aufsicht erkennbar - freie Zwischensubstratoberflächen 338. Die Restabschnitte 232 der Pigmentschicht liegen nach dem Trennen weiterhin auf dem Ausgangssubstrat 215, 216 vor.

Wie in Fig. 2c angedeutet werden die Pigmentabschnitte 331 anschließend vom Zwischensubstrat gelöst und liegen dann als Vielzahl von Pigmenten 1 vor. Die Pigmente 1 werden zu einer Druckfarbe weiter verarbeitet.

Die Pigmentabschnitte sind zu dem Zeitpunkt des Strukturierens der Pigmentschicht in Pigmentabschnitte - durch Brechen und Lösen der Pigmentabschnitte von dem Ausgangssubstrat - durch das Zwischensubstrat gegen Zerbrechen geschützt. Die Pigmentabschnitte werden keiner unnötigen Kraft ausgesetzt und können somit wesentlich dünner oder filigraner gestaltet werden als herkömmlich.

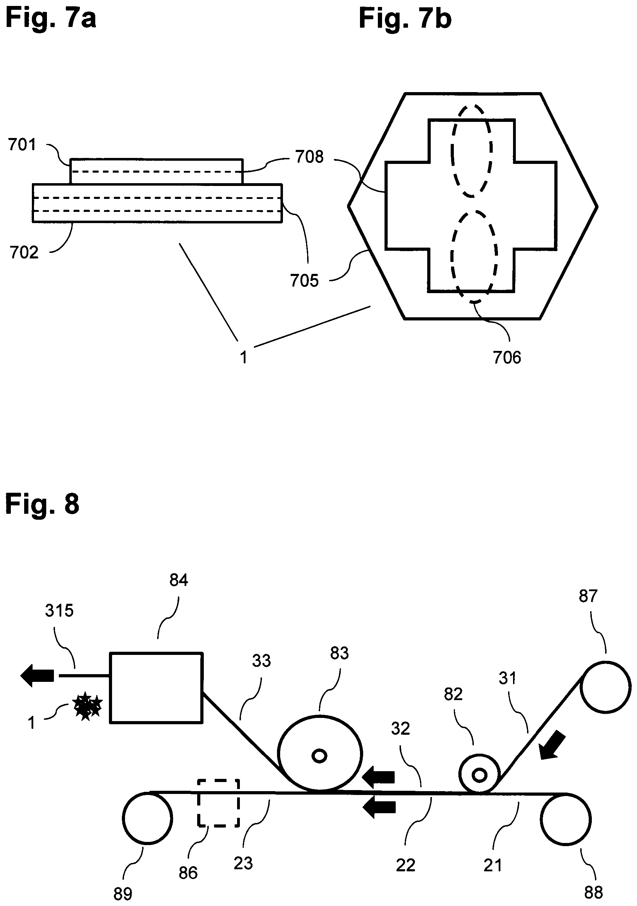

Fig. 8 zeigt eine Vorrichtung zur Herstellung von Pigmenten 1 ausgehend von einem Ausgangssubstrat mit Pigmentschicht.

Von einer ersten Ausgangssubstratschichtrolle 88 wird das Ausgangssubstrat mit Pigmentschicht 21 abgewickelt. Von einer Zwischensubstratrolle 87 wird ein Zwischensubstrat 31 abgewickelt. Bevorzugt wird das abgewickelte Zwischensubstrat 31 mit einer Haftschicht versehen, beispielsweise bedruckt oder besprüht. Die Substrate werden, beispielsweise mit Hilfe einer Kontaktwalze 82, miteinander in Kontakt gebracht. Die Pigmentschicht des Ausgangssubstrates 22 haftet an der Haftschicht des Zwischensubstrates 32 an. Beispielsweise an einer Trennwalze 83 werden die Substrate wieder voneinander getrennt. Die Zwischenträgerbahn mit Pigmentabschnitten 33 wird zu einer Ablöseeinheit 84 geführt. In der Ablöseeinheit 84 werden die Pigmente 1 von der Zwischenträgerbahn 315 gelöst, beispielsweise durch Auflösen der Haftschicht 316 der Zwischenträgerbahn.

Die Vielzahl der Pigmente 1 kann nun zu Druckfarbe weiter verarbeitet werden. Das Ausgangssubstrat mit Pigmentschichtresten 23 kann in einer optionalen, weiteren Ablöseeinheit 86 von den Pigmentschichtresten befreit werden und auf einer zweiten Ausgangssubstratrolle 89 wieder aufgewickelt werden. Die Ablöseeinheit 86 kann die Pigmentschichtreste 23 auf dem Ausgangssubstrat auflösen (also beispielsweise chemisch zersetzen und/oder mechanisch zerkleinernd ablösen). Das Ausgangssubstrat und/oder das Zwischensubstrat können für die Herstellung weiterer Pigmente wieder verwendet werden.

Die gezeigte Vorrichtung (mit einer Trennwalze) ermöglicht ein kontinuierliches Strukturieren, insbesondere also ein kontinuierlich erfolgendes Brechen der Pigmente aus der Pigmentschicht. Es sind andere Varianten denkbar, beispielsweise mit einem Stempel, die das (Kontaktieren und) Trennen der Substrate - eher wie in Figur 3 gezeigt - für voneinander unabhängige Substrate nacheinander ausführen oder jeweils für Abschnitte einer Substratbahn nacheinander ausführen.

Das vorliegende Verfahren kann in mehrere Teilschritte gegliedert werden.

Schritt 1 (optional): Beschichten einer Ausgangssubstratschicht bzw. eines Trägermaterials, z.B. einer PET-Folie, mit einem Prägelack.

Die Prägelackschicht ist bevorzugt ein Lack mit geringer Haftung zur Pigmentschicht. Der Prägelack kann insbesondere so gewählt sein, dass auf ihn eine (PVD-) Schicht trennbar (bzw. mechanisch wieder ablösbar) aufgedampft werden kann. Bei dem Prägelack kann es sich um einen UVhärtbaren Lack oder einen thermoplastischen Prägelack handeln.

Schritt 2: Vorstrukturieren der Ausgangssubstratschicht, insbesondere mit einer Reliefstruktur.

Die Reliefstruktur wird durch (Rolle-zu-Rolle-)Prägen von binären Strukturen, welche dem Umriss der Effektpigmente entsprechen, in den Prägelack eingebracht. Je nach verwendetem Prägelack erfolgt die Prägung unter Einwirkung von UV-Strahlung oder Wärme, um die Strukturen im Lack zu erzeugen und zu fixieren. Die Tiefe der Prägestruktur hängt von der Dicke der Effektpigmente ab: für dünne Pigmente (z.B. 300 nm) reicht eine Tiefe von ca. 1 µm oder mehr. Dickere Pigmente erfordern tiefere Prägestrukturen. Die Flanken der binären Prägestruktur sind ausreichend steil, damit die Pigmentschichten dort später gebrochen werden können.

Wenn die Pigmente später nicht nur ihre Kontur sondern auch eine Zusatzinformation aufweisen sollen, können diese auf den erhabenen und / oder vertieften Bereichen der binären Prägung als Oberflächenmodulation eingeprägt werden. Dies geschieht bevorzugt während desselben Prägeschritts, d.h. das Prägewerkzeug enthält die tiefe binäre Struktur zur Definition der Pigmentumrisse und zugleich die flachere Oberflächenstruktur zur Erzielung zusätzlicher, beispielsweise optischer Effekte in den Pigmenten. Dieses Vorgehen birgt den großen Vorteil, dass die die optischen Effekte bewirkenden Oberflächenmodulationen perfekt registriert sind zur Kontur der Effektpigmente. Beispielsweise können so diffraktive Schriftzüge genau im Zentrum von Pigmenten untergebracht werden.

Alternativ zum geprägten Lack kann auch ein strukturiert aufgebrachter, beispielsweise aufgedruckter, Releaselack passender Dicke verwendet werden. Ein Nachteil dieser Variante bestünde allerdings darin, dass mit einem Druckverfahren nur geringere Auflösungen erzielbar sind als mit einem Prägeverfahren.

Schritt 3 (optional): Falls in Schritt 1 kein Lack verwendet wurde, auf dem die nachfolgend abgeschiedene PVD Schicht ohnehin nur schwach haftet, ist als dritter Schritt eine Maßnahme erforderlich, die dazu führt, dass keine starke Haftung zwischen dem Prägelack und der im nächsten Schritt abgeschiedenen Beschichtung zustande kommt. Beispielsweise kann eine Anti-Haftschicht aufgebracht werden.

Schritt 4: Erstellen der Pigmentschicht auf der Prägestruktur, einschließlich aller Teilschichten der Pigmentschicht.

Die Pigmentschichten werden insbesondere aufgedampft, z.b. mittels PVD-Beschichten der Prägestruktur. Dabei werden die zuvor beschriebenen Teilschichten oder Unterschichten der Teilschichten aufgebracht. Wichtig ist, dass die Schichten von der Prägestruktur lösbar bleiben. Geeignete Verfahren sind beispielsweise PVD-Verfahren, von denen das thermische Bedampfen besonders bevorzugt wird, da es durch den gerichteten Teilchenstrom zu einer geringeren Beschichtung der senkrechten Wände zwischen den erhabenen und vertieften Bereichen der binären Prägung führt. Dies erleichtert später die Trennung der Beschichtung beim Trennen der Substrate.

Alternativ könnte eine Teilschicht, insbesondere eine metallische Schicht, auch mittels Tief- oder Flexodruckverfahren appliziert werden. Wegen der notwendigen Sollbruchstelle werden hierfür bevorzugt Lösemittel bzw. wasserbasierte Farben mit Metallflakes eingesetzt, welche bevorzugt eine Dicke kleiner 200 nm besosonders bevorzugt kleiner 150 nm aufweisen.

Schritt 5: Bereitstellen einer Folie, die mit klebrigem und ggf. verformbarem Lack beschichtet ist, als Zwischensubstrat.

Schritt 6: In Kontakt bringen der Pigmentschicht mit dem Zwischensubstrat. Das Zwischensubstrat wird mit der geprägten und beschichteten ersten Folie, dem Ausgangssubstrat, unter Einwirkung von Druck und ggf. bei erhöhter Temperatur kaschiert. Die Bestandteile der Beschichtung, die sich auf den erhabenen Bereichen der binären Prägestruktur befinden, verbinden sich fest mit dem klebrigen Lack. Eine ggf. vorhandene Oberflächenmodulation, beispielsweise ein holographisches Gitter, wird sich dabei in den klebrigen Lack einprägen. Die Pigmentschicht in den Vertiefungen der Prägestruktur berührt die Kleberschicht vorzugsweise nicht.

Schritt 7: Beim Trennen bzw. Trennwickeln der beiden Folien werden die lösbar mit den erhabenen Bereichen der binären Prägung verbundenen Abschnitte der Beschichtung auf den klebrigen Lack der zweiten Folie - dem Zwischensubstrat - übertragen. Diejenigen Abschnitte der Beschichtung, die sich in den Vertiefungen der binären Prägung befinden, bleiben jedoch auf der ersten Folie - dem Ausgangssubtrat - zurück.

Schritt 8: Zuletzt werden die in ihrer Umrissform wohldefinierten Pigmente von der jeweiligen Trägerfolie gelöst, beispielsweise indem der sie tragende Lack in einem geeigneten Lösungsmittel an- oder aufgelöst wird. Die sich in Lösung befindlichen Pigmente werden anschließend durch geeignete Schritte weiterverarbeitet. Es ist darauf zu achten, dass sie nicht miteinander verklumpen.

Als Pigmente verarbeitet werden die auf das Zwischensubstrat, die zweite Folie, übertragenen und abgelösten Abschnitte der Pigmentschicht.

Das Ausgangssubstrat, die erste Folie, mit den verbliebenen Pigmentschichtabschnitten könnte entsorgt werden. Alternativ zur Entsorgung könnten aber auch die Beschichtungsbestandteile, die auf der ersten Folie zurückbleiben, zu Pigmenten (ohne vorgegeben Kontur oder mit negativer Kontur) weiterverarbeitet werden. Es ist also auch möglich, sowohl die Pigmentschichtabschnitte auf der ersten als auch der zweiten Folie zu unterschiedlichen Pigmenten zu verarbeiten.

Das Ausgangssubstrat kann für das vorliegende Verfahren jedoch auch wiederverwendet werden, optional nachdem die Restabschnitte vom Ausgangssubstrat abgelöst worden sind. Auf dem Ausgangssubstrat mit Reliefstruktur, der ersten Folie, kann mehrfach hintereinander eine Pigmentschicht erstellt (strukturiert und ...) werden. Somit können Materialkosten und Prozess-Schritte gespart werden, denn der Prägelack und die Prägung müssten nicht immer wieder neu ausgeführt werden. Bevorzugt wird als Prägelack ein UV-härtbares Material verwendet, in dem die Strukturen dauerhaft eingeprägt werden. Insbesondere kann somit erreicht werden, dass die erhöhte Temperatur beim Kaschierschritt die Reliefstruktur nicht beeinträchtigt.

In den bisher beschriebenen Ausgestaltungen wurde das Ausgangssubstrat mit einer Reliefstruktur versehen, in welcher sich auf den Erhebungen die Pigmentabschnitte mit der vorgegebenen Kontur bilden. Alternativ kann das Relief auch invers gestaltet sein. Es kann flächige Vertiefungen mit der vorgegeben Kontur für die Pigmentabschnitte und Erhebungen für die Restabschnitte umfassen. Die Restabschnitte lösen sich dann beim Trennen von dem Ausgangssubstrat und haften an dem Zwischensubstrat an. Die Pigmentabschnitte (in den Vertiefungen) bleiben auf dem Ausgangssubstrat und werden erst nach dem Trennen der Substrate von dem Ausgangssubstrat gelöst. Letztlich ist es in einer weniger vorteilhaften Ausgestaltung sogar denkbar die Zwischensubstratschicht mit der Reliefstruktur zu versehen, so dass die (nicht vorstrukturierte) Pigmentschicht im Bereich der Erhebungen des Reliefs an der Haftschicht des Zwischensubstrates haften bleibt. Die Erhebungen können dabei wiederum alternativ entweder den Pigmentabschnitten mit der vorgegebenen Kontur oder den Restabschnitten entsprechen.

Die in Fig. 4 auf dem Zwischensubstrat 33 angeordneten Pigmentabschnitte 331 (oder alternativ die auf Erhebungen des Zwischensubstrates angeordnete Pigmentabschnitte), können optional mit einer weiteren Teilschicht versehen werden. Die weitere Teilschicht kann vollflächig bereitgestellt werden und mittels eines Kontaktdruckverfahrens (Kiss-Print) vorteilhaft nur auf die Pigmentabschnitte 331 aufgebracht werden. Auf die freien Abschnitte 338 der Haftschicht wird die Teilschicht nicht übertragen, da nur die Pigmentabschnitte 331 in Kontakt mit der Teilschicht kommen. Das Kontaktdruckverfahren nutzt dabei implizit die bestehenden Höhenunterschiede der Pigmentabschnitte auf dem Substrat als Druckvorlage. Die Pigmentabschnitte einschließlich ihrer weiteren (rückseitigen) Teilschicht werden vom Zwischensubstrat gelöst.

Grundsätzlich könnten auch Teilschichten der Pigmentschicht mit einem Kontaktdruckverfahren erstellt werden. Beispielsweise kann eine weitere Pigmentteilschicht auf, beispielsweise aufgedampfte, vorhandene Pigmentteilschichten aufgedruckt werden, die auf dem Ausgangssubstrat mit Reliefstruktur vorliegen. Die (vollflächig bereitgestellte) weitere Teilschicht wird dabei analog nur auf die erhabenen Abschnitte der Pigmentschicht aufgebracht.

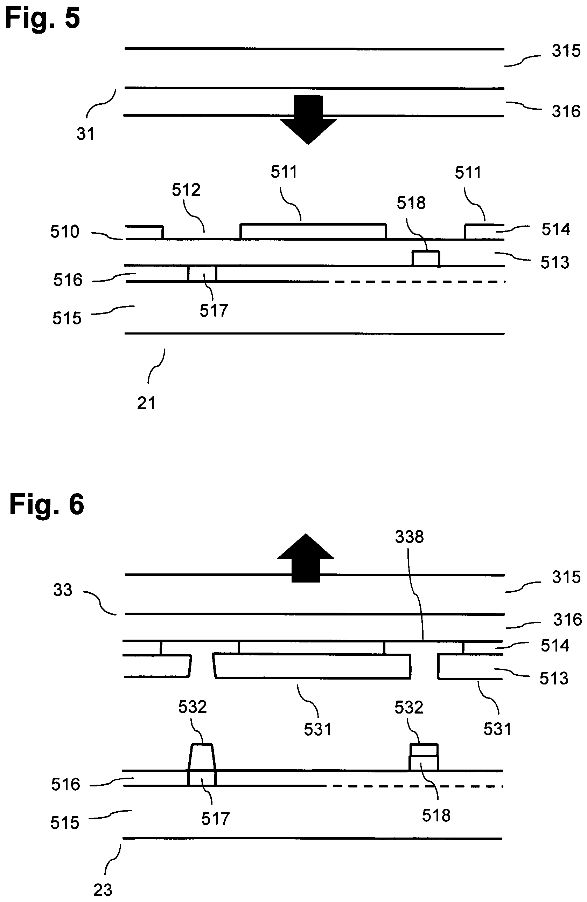

In der Ausgestaltung nach Fig. 3 und 4 ist die Pigmentschicht durch eine Reliefstruktur vorstrukturiert, um die Kontur des Pigments vorzugeben. Fig. 5 und 6 zeigen alternative Ausgestaltungen, in welchen eine haftungsbestimmende Schicht strukturiert ist, um die Kontur vorzugeben.

Das Ausgangssubstrat mit Pigmentschicht 21 umfasst in Fig. 5 eine Substratschicht 516, 517, 518 und eine Pigmentschicht 510, die ihrerseits zwei Teilschichten 513, 514 enthält. Auf der PET-Folie 515 wird eine strukturierte haftungsbestimmende Schicht vorgesehen, die als durchgehende Anti-Haftschicht 516 mit Haftschichtabschnitten 517 oder als auf der Substratschicht 515 (oder der Antihaftschicht 516) angeordnete Haftschicht 518 ausgebildet sein kann. Die Pigmentschicht 510 umfasst die durchgehende Pigmentteilschicht 513 sowie eine nicht-durchgehende (sondern bereits strukturierte) Pigmentteilschicht 514. Pigmentabschnitte 511 der Pigmentschicht und Restabschnitte 512 sind durch die Haftungsstruktur 517, 518 vorgegeben.

Das Ausgangssubstrat 21 wird wie in Fig. 5 durch den Pfeil symbolisch dargestellt mit der Haftschicht 316 auf dem Zwischensubstrat in Kontakt gebracht. Die Haftschicht 316 kann dabei auch mit den Restabschnitten 512, also nicht nur den Pigmentabschnitten, in Kontakt kommen. Die Haftschicht 316 und die Haftstruktur 517, 518 sind so aufeinander abgestimmt, dass die Pigmentschicht stärker an der Haftstruktur 517, 518 anhaftet. Die Pigmentschicht wird wiederum beim Trennen der Substrate strukturiert in die Pigment(abschnitt)e.

Fig. 6 zeigt nach dem Trennen der Substrate das Ausgangssubstrat mit Pigmentschichtresten 23 und das Zwischensubstrat einschließlich Pigmentabschnitten 33. Auf der Haftstruktur 517, 518 bleiben Restabschnitte 532 der Pigmentschicht haften. Die Pigmentabschnitte 531 bleiben am Zwischensubstrat haften, haben sich also beim Trennen vom Ausgangssubstrat bzw. dessen Antihaft-Schicht 516 gelöst. Zwischen den Pigmentabschnitten bleiben freie Abschnitte 338 der Haftschicht 316. Die Pigmentabschnitte 531 umfassen die zwei Teilschichten 513, 514. Die Pigmentabschnitte 531 werden (nach dem Trennen) von der Zwischensubstratschicht 315, 316 gelöst und als Pigmente, insbesondere zu einer Druckfarbe, weiter verarbeitet.

Wenn das zum Lösen der Pigmentabschnitte verwendete Lösemittel (z.B. Wasser) kompatibel mit dem Bindemittel der Druckfarbe ist, so kann die Dispersion auch gleich einer Druckfarbe zugeführt werden. Gegebenenfalls kann mittels eines Vakuummischers noch überschüssiges Lösemittel abgezogen werden. In einer anderen Variante werden die Pigmente 1 mittels eines Gefriertrockners getrocknet (Lösemittel abgezogen) und die trockenen Pigmente in eine Druckfarbe eingemischt.

In Fig. 7a und 7b ist ein Pigment 1 im Querschnitt und in Aufsicht dargestellt. Das Pigment umfasst - wie das in Fig. 5 und 6 dargestellte Pigment - zwei Pigmentteilschichten 701 und 702. Beide Pigmentteilschichten können ihrerseits durch Unterschichten, wie beispielsweise ein Dreischichtaufbau mit Absorber, Dielektrikum und Absorber (oder Reflektor) gebildet sein. Die zweite Pigmentschicht 702 weist eine Bruchkante 705 auf, welche der Außenkontur des Pigments 1 entspricht. Die erste Pigmentteilschicht 701 ist als Zusatzinformation 708 mit einer von der Außenkontur unabhängigen Kontur auf dem Pigment 1 vorgesehen. Nur in Fig. 7b angedeutet ist, dass das Pigment 1 zudem auch - beispielsweise zwei - Öffnungen 706 aufweisen kann.

Im Folgenden werden Varianten von haftungsbestimmenden Vorstrukturierungen diskutiert, die analog zu den beiden in Figur 5 und 6 dargestellten Varianten verwendbar sind. Die strukturierte haftungsbestimmende Schicht kann als Haftschicht oder als Anti-Haftschicht ausgestaltet werden. Sie kann vollflächig aufgetragen werden und mittels Laserbestrahlung abschnittsweise abgetragen werden, insbesondere entweder entsprechend den Pigmentabschnitten oder den Restabschnitten. Alternativ wird die haftungsbestimmende Schicht mittels Drucken abschnittsweise aufgetragen, also nur in den entsprechenden (Pigment- oder Rest-) Abschnitten. Die haftungsbestimmende Schicht kann durch einen Lack gebildet sein, welcher als Prägelack vorzugsweise eine "optische" Prägung umfasst, die in dem Pigment eine Zusatzinformation erzeugt.

Bei einer weiteren optionalen Variante wird ein strukturierter Druck jeweils in Pigmentform, also in den späteren Pigmentabschnitten, auf einer (unbehandelt) nicht gut haftenden Schicht 516 aufgebracht. In einem zweiten Prozessschritt wird mittels einer Vorbehandlungsanlage (Plasma, Openairplasma, Flammvorbehandlung oder Coronavorbehandlungsanlage) die strukturiert bedruckte Substratschicht vorbehandelt. Die nicht haftende Schicht 516 wird durch die Vorbehandlung zu einer haftenden Schicht umfunktionalisiert. Die vorab aufgedruckten Abschnitte in Pigmentform dienen dabei als Schablone für die Vorbehandlung. Entsprechend entstehen haftende Abschnitte 517, auf denen die Restabschnitte 512 der Pigmentschicht beim Trennen haften bleiben, während die Pigmentabschnitte 511 sich beim Trennen von der weiterhin nicht gut haftenden Schicht 516 löst.

Die haftungsbestimmende Schicht weist bevorzugt eine Dicke von mindestens 1 µm auf. Somit werden - analog zur Reliefstruktur - in der darauf erstellten Pigmentschicht, die beispielsweise eine Dicke von 30 nm bis 4 µm hat, Sollbruchstellen erzeugt. Möglich wäre es auch mittels Druckverfahren eine Ätz- oder Waschfarbe zu applizieren, um die haftungsbestimmende Schicht zu strukturieren. Eher nur theoretisch denkbar wäre es mittels der Wasch- oder Ätzfarbe direkt die Pigmentschicht zu strukturieren. Allerdings entfaltet das vorliegende Verfahren die wichtigsten Vorteile an noch nicht strukturierten Pigmentschichten.

Eine weitere Herstellungsmethode von Pigmenten mit enger Größenverteilung könnte mittels Risstemplate erfolgen. Risstemplate meint dabei eine Schicht auf einer Trägerfolie (z.B. PET), die ein Netzwerk an durchgehenden Rissen aufweist, sodass die gesamte Schicht letztlich aus einzelnen Inseln besteht. Dieses Risstemplate wird metallisiert, wobei an den Inselrändern die Metallisierung durch den Höhenunterschied abreisst und die Inselgröße dadurch die Pigmentgröße bestimmt. Im Idealfall ist die Pigmentschicht durch die Rissbildung strukturiert. Der vorliegende relevantere Fall ist, dass die Rissbildung nicht zu einer vollständigen Trennung der Pigmentschichten führt.

Um die Pigmente zu erhalten, ist das Risstemplate entweder von der Folie lösbar (das Risstemplate löst sich von der Folie, bleibt aber mit den anderen Pigmentschichten verbunden) oder das Risstemplate ist selbst wasserlöslich bzw. in einem anderen Lösungsmittel löslich, sodass es sich - vorliegend nach dem Trennen der Substrate - auflöst und das Pigment freigibt.

Es lassen sich somit zwei Pigmentarten herstellen:
- Pigmente, die aus einer ersten Pigmentteilschicht, wie beispielsweise einer aufgedampften Metallisierung, und aus der rissbildenden Schicht bestehen; oder
- Pigmente, die nur aus der Pigmentschicht, wie beispielsweise einer aufgedampften Metallschicht, bestehen (ohne rissbildende Schicht).

Die rissbildende Schicht kann zur Stabilität der Pigmente beitragen oder das rissbildende Material kann funktionelle Eigenschaften besitzen (z.B. fluoreszierende Farbstoffe oder magnetische Partikel).

Es sind verschiedene Möglichkeiten bekannt, das Risstemplate herzustellen. In einer ersten Ausführung bildet eine auf einer Trägerfolie vollflächig aufgebrachte Dispersion mit genügend hoher Mindestfilmbildungstemperatur (MFT > 50°C) beim physikalischen Trocknen Risse. Die Dispersion besteht aus in Wasser dispergierten Teilchen organisch-polymerer (z.B. auf Basis von Polyacrylate, Polystyrole, usw.) oder anorganischer (z.B. SiO2, TiO2, Al2O3, usw.) Natur oder Mischungen daraus. Um eine Löslichkeit des Risstemplates in Wasser zu gewährleisten, können wasserlösliche Verbindungen zugesetzt werden. In einer weiteren Ausführungsform wird ein spröder UV-Lack mit hohem Schrumpf vollflächig auf eine Trägerfolie aufgebracht. Während der Strahlenhärtung bilden sich aufgrund des Schrumpfes durchgängig Risse. Dieses Risstemplate kann weiter metallisiert werden, um die Pigmente zu erhalten. Idealerweise ist der UV-Lack so gestaltet, dass er sich in Wasser von selbst ablöst (wasserlösliche UV-Lacke). Für wasserunlösliche UV-Lacke ist eine wasserlösliche Zwischenschicht denkbar, um die Pigmente in Wasser von der Ausgangsfolie zu lösen. Eine Gegenkaschierfolie mit Kleber wird die Pigmente von der Trägerfolie lösen, wobei der Kleber anschließend aufgelöst wird und so die Pigmente freigibt.

Die Steuerung der Rissbildung ist für die Größenverteilung und Form der Pigmente ausschlaggebend und abhängig von der gewählten Herstellungsmethode des Risstemplates. Für physikalisch trocknende Dispersionen erfolgt die Einstellung der Inselgröße (=Pigmentgröße) über die bekannten Parameter wie Mindestfilmbildungstemperatur, Schichtdicke, Partikelgröße, Additivierung oder Trocknungsbedingung. Darüber hinaus ist bekannt, dass die erste Generation an Rissen senkrecht vom Rand des Druckbildes nach innen reißt, woraufhin die zweite Generation an Rissen nun parallel zum Rand des Druckbildes und somit zwischen der ersten Rissgeneration entsteht. Das daraus resultierende leiterartige Risstemplate führt zu rechteckigen Inseln bzw. Pigmenten. Mit zunehmender Entfernung vom Rand des Druckbildes nimmt dieser Effekt jedoch ab. Sind nur rechteckige Inseln gewünscht, erfolgt eine Bedruckung der Folie in Streifen. Hexagonale Inseln und damit Pigmente sind ebenfalls möglich.

Für Risstemplates auf Basis von UV-Lacken kann eine Sollbruchstelle bei der Strahlenhärtung durch geeignete Strukturen auf einem Prägewerkzeug (PWZ) eingeführt werden. Das PWZ drückt bspw. zwei Kerben in oder durch den UV-Lack (vgl. Nanoimprinting), wobei nach Strahlenhärtung aufgrund des Schrumpfes ein Riss auf kürzester Entfernung zwischen den zwei Kerben initiiert wird. Durch bestimmte Anordnung der Kerben können die Risse nun in Linien und Gittern gezielt gesteuert werden. Selbstverständlich können durch diese Methode auch ganz einfach hexagonale Pigmente hergestellt werden, indem die Kerben ähnlich einem dreizackigen Stern Risse in 120° Winkeln zueinander generieren. Durch die Vielfalt der Anordnung der Kerben zueinander und die Art der Kerben an sich ist eine Vielfalt an Formen für die Inseln und daher Pigmenten gegeben.

Auch mit Hilfe eines Risstemplates erstellte Pigmentabschnitte (oder Inseln) können entsprechend den zu Figur 3, 4, 5, 6 oder 8 beschriebenen Verfahren von dem Ausgangssubstrat gelöst und dabei vorzugsweise zugleich strukturiert werden.

## Patentansprüche

1. Verfahren zur Herstellung von Pigmenten (1) mit vorgegebener Kontur (5,6), mit den Schritten:
- Erstellen einer Pigmentschicht (210) auf einem Ausgangssubstrat (20);
- Lösen von dem Ausgangssubstrat (20); und
- Strukturieren der Pigmentschicht (210) in eine Vielzahl der Pigmente (1);
**gekennzeichnet durch**
in Kontakt bringen der Pigmentschicht (210) mit einem Zwischensubstrat (31), wobei die Pigmentschicht (210) mindestens abschnittsweise an dem Zwischensubstrat (31) anhaftet; und
Trennen von Zwischensubstrat (31) und Ausgangssubstrat (21).

2. Verfahren nach Anspruch 1, **dadurch gekennzeichnet, dass** die Pigmente (1) durch den Kontakt mit dem Zwischensubstrat (31) für den Schritt des Lösens und/oder des Strukturierens gegen Zerbrechen der Pigmente (1) geschützt werden.

3. Verfahren nach Anspruch 1 oder 2, **dadurch gekennzeichnet, dass** die Pigmente (1) als die vorgegebene Kontur eine vorgegebene Außenkontur (5, 705) und/oder eine vorgegebene Innenkontur (6, 706) aufweisen.

4. Verfahren nach einem der Ansprüche 1 bis 3, **dadurch gekennzeichnet, dass** die Pigmentschicht (210) durch den Schritt des Trennens von Zwischensubstrat und Ausgangssubstrat in die Vielzahl der Pigmente (331,531) strukturiert wird.

5. Verfahren nach einem der Ansprüche 1 bis 4, **dadurch gekennzeichnet, dass** die Pigmente (1) durch den Schritt des Trennens von dem Ausgangssubstrat (21) gelöst werden.

6. Verfahren nach einem der Ansprüche 1 bis 4, **dadurch gekennzeichnet, dass** die Vielzahl der Pigmente (1) nach dem Trennen auf dem Ausgangssubstrat vorliegen und anschließend vom Ausgangssubstrat gelöst werden.

7. Verfahren nach einem der Ansprüche 1 bis 3, **dadurch gekennzeichnet, dass** die Pigmentschicht vor dem Schritt des Trennens strukturiert wird.

8. Verfahren nach einem der Ansprüche 1 bis 7, **dadurch gekennzeichnet, dass** in dem Ausgangssubstrat und/oder dem Zwischensubstrat eine Reliefstruktur (217) erstellt wird, welche die Kontur (5, 6) der Pigmente (1) vorgibt.

9. Verfahren nach Anspruch 8, **dadurch gekennzeichnet, dass** die Reliefstruktur durch Prägen eine - vorzugsweise mittels UV-Licht - härtbare Prägeschicht des Ausgangssubstrates und/oder des Zwischensubstrates erfolgt.

10. Verfahren nach einem der Ansprüche 1 bis 7, **dadurch gekennzeichnet, dass** das auf der Pigmentschicht, dem Ausgangssubstrat und/oder dem Zwischensubstrat eine haftungsbestimmende Struktur erstellt wird, welche die Kontur (5, 6) der Pigmente (1) vorgibt.

11. Verfahren nach einem der Ansprüche 1 bis 10, **dadurch gekennzeichnet, dass** das das Pigment (1) ein Zusatzmotiv (708) enthält, welches vorzugsweise passergenau zur Kontur (705, 706) des Pigmentes angeordnet ist und/oder eine von der Pigmentkontur (705, 706) unabhängige Kontur (708) aufweist.

12. Verfahren nach Anspruch 11 mit Anspruch 8 oder 9, **dadurch gekennzeichnet, dass** in dem Schritt des Erstellens der Reliefstruktur das Zusatzmotiv zumindest teilweise mit erstellt wird, insbesondere als optisch variable Prägestruktur.

13. Verfahren nach einem der Ansprüche 1 bis 12, **dadurch gekennzeichnet, dass** die Pigmentschicht mindestens eine durchgehende Teilschicht (702) sowie eine zusätzliche, nicht durchgehende, Teilschicht (701) umfasst.

14. Verfahren nach einem der Ansprüche 1 bis 13, **dadurch gekennzeichnet, dass** die Pigmentschicht
auf einer ausgehärteten Lackschicht des Ausgangssubstrats erstellt wird, welche insbesondere auf einer Folienschicht des Ausgangssubstrats angeordnet ist; und/oder
an einer Lackschicht des Zwischensubstrates anhaftet, welche insbesondere auf einer Folienschicht des Zwischensubstrates angeordnet ist.

## Claims

1. Process for producing pigments (1) with a predefined contour (5, 6), comprising the following steps:
- creating a pigment layer (210) on a starting substrate (20);
- detaching it from the starting substrate (20); and
- structuring the pigment layer (210) into a multiplicity of pigments (1);
**characterized by**
bringing the pigment layer (210) into contact with an intermediate substrate (31), with at least some portions of the pigment layer (210) adhering to the intermediate substrate (31); and
separating the intermediate substrate (31) and the starting substrate (21).

2. Process according to Claim 1, **characterized in that** the pigments (1) are protected against breaking of the pigments (1) by the contact with the intermediate substrate (31) for the detaching step and/or structuring step.

3. Process according to Claim 1 or 2, **characterized in that** the predefined contour of the pigments (1) is a predefined outer contour (5, 705) and/or a predefined inner contour (6, 706).

4. Process according to one of Claims 1 to 3, **characterized in that** the pigment layer (210) is structured into the multiplicity of pigments (331, 531) by the step of separating the intermediate substrate and the starting substrate.

5. Process according to one of Claims 1 to 4, **characterized in that** the pigments (1) are detached from the starting substrate (21) by the separating step.

6. Process according to one of Claims 1 to 4, **characterized in that** the multiplicity of pigments (1) are present on the starting substrate after the separating and are then detached from the starting substrate.

7. Process according to one of Claims 1 to 3, **characterized in that** the pigment layer is structured before the separating step.

8. Process according to one of Claims 1 to 7, **characterized in that** a relief structure (217) predefining the contour (5, 6) of the pigments (1) is created in the starting substrate and/or the intermediate substrate.

9. Process according to Claim 8, **characterized in that** the relief structure is effected by embossing a curable - preferably by means of UV light - embossed layer of the starting substrate and/or of the intermediate substrate.

10. Process according to one of Claims 1 to 7, **characterized in that** an adhesion-determining structure predefining the contour (5, 6) of the pigments (1) is created on the pigment layer, the starting substrate and/or the intermediate substrate.

11. Process according to one of Claims 1 to 10, **characterized in that** the pigment (1) contains an additional pattern (708) which preferably is arranged in register in relation to the contour (705, 706) of the pigment and/or has a contour (708) independent of the pigment contour (705, 706).

12. Process according to Claim 11 with Claim 8 or 9, **characterized in that**, in the step of creating the relief structure, the additional pattern is at least partially conjointly created, in particular in the form of an optically variable embossed structure.

13. Process according to one of Claims 1 to 12, **characterized in that** the pigment layer comprises at least one continuous partial layer (702) and an additional, non-continuous partial layer (701).

14. Process according to one of Claims 1 to 13, **characterized in that** the pigment layer
is created on a curable varnish layer of the starting substrate, the curable varnish layer being arranged in particular on a film layer of the starting substrate; and/or
adheres to a varnish layer of the intermediate substrate, the varnish layer being arranged in particular on a film layer of the intermediate substrate.

## Revendications

1. Procédé de préparation de pigments (1) pourvus d'un contour (5, 6) défini, présentant les étapes de :
- création d'une couche pigmentaire (210) sur un substrat de départ (20) ;
- détachement du substrat de départ (20) ; et
- structuration de la couche pigmentaire (210) en une multitude de pigments (1) ;
**caractérisé par**
la mise en contact de la couche pigmentaire (210) avec un substrat intermédiaire (31), la couche pigmentaire (210) adhérant au moins par sections au substrat intermédiaire (31) ; et
séparation du substrat intermédiaire (31) et du substrat de départ (21).

2. Procédé selon la revendication 1, **caractérisé en ce que** les pigments (1) sont protégés pour l'étape de détachement et/ou de structuration contre une fragmentation des pigments (1) par le contact avec la substrat intermédiaire (31).

3. Procédé selon les revendications 1 ou 2, **caractérisé en ce que** les pigments (1) présentent, en tant que contour défini, un contour externe (5, 705) défini et/ou un contour interne (6, 706) défini.

4. Procédé selon l'une des revendications 1 à 3, **caractérisé en ce que** la couche pigmentaire (210) est structurée en la multitude de pigments (331, 531) par l'étape de séparation du substrat intermédiaire et du substrat de départ.

5. Procédé selon l'une des revendications 1 à 4, **caractérisé en ce que** les pigments (1) sont détachés du substrat de départ (21) par l'étape de séparation.

6. Procédé selon l'une des revendications 1 à 4, **caractérisé en ce que** la multitude de pigments (1) se trouvent sur le substrat de départ après la séparation et sont ensuite détachés du substrat de départ.

7. Procédé selon l'une des revendications 1 à 3, **caractérisé en ce que** la couche pigmentaire est structurée avant l'étape de séparation.

8. Procédé selon l'une des revendications 1 à 7, **caractérisé en ce qu'**une structure en relief (217) est créée dans le substrat de départ et/ou le substrat intermédiaire, laquelle structure définit le contour (5, 6) des pigments (1).

9. Procédé selon la revendication 8, **caractérisé en ce que** la structure en relief est créée par gaufrage d'une couche gaufrée durcissable - de préférence au moyen de lumière UV - du substrat de départ et/ou du substrat intermédiaire.

10. Procédé selon l'une des revendications 1 à 7, **caractérisé en ce qu'**une structure déterminant l'adhérence est créée sur la couche pigmentaire, le substrat de départ et/ou le substrat intermédiaire, laquelle structure définit le contour (5, 6) des pigments (1).

11. Procédé selon l'une des revendications 1 à 10, **caractérisé en ce que** le pigment (1) contient un motif supplémentaire (708), qui est de préférence agencé parfaitement par rapport au contour (705, 706) du pigment et/ou qui présente un contour (708) indépendant du contour (705, 706) du pigment.

12. Procédé selon la revendication 11 conjointement avec la revendication 8 ou 9, **caractérisé en ce que** le motif supplémentaire est créé au moins partiellement conjointement dans l'étape de création de la structure en relier, en particulier en tant que structure gaufrée optiquement variable.

13. Procédé selon l'une des revendications 1 à 12, **caractérisé en ce que** la couche pigmentaire comprend au moins une couche partielle (702) continue ainsi qu'une couche partielle (701) supplémentaire, non continue.

14. Procédé selon l'une des revendications 1 à 13, **caractérisé en ce que** la couche pigmentaire
est créée sur une couche de laque durcie du substrat de départ, qui est en particulier agencée sur une couche de feuille du substrat de départ et/ou
adhère à une couche de laque du substrat intermédiaire, qui est en particulier agencée sur une couche de feuille du substrat intermédiaire.
